# EUROPEAN PATENT APPLICATION

(11) **EP 3 451 214 A1**
(43) Date of publication of application: **06.03.2019**
(21) Application number: 17189443.9
(22) Date of filing: 05.09.2017
(51) Int. Cl.: G06F 21/12, G06F 21/74

(54) **COMPUTING DEVICE WITH COMPUTER PROGRAM BOUNDED THERETO**

(71) Applicant: Koninklijke Philips N.V., 5656 AE Eindhoven (NL)
(72) Inventor: Bodlaender, Maarten Peter, 5656 AE Eindhoven (NL)
(74) Representative: de Haan, Poul Erik

(57) **Abstract**

Some embodiments are directed to an electronic computing device (100) for protected data processing. The computing device is configured to decrypt an encrypted configuration data with a private key stored in a private key store and store the configuration data in a configuration store, and apply a transformation to the operand data to obtain the result of the transformation, the transformation being determined by the configuration data.

## Description

### FIELD OF THE INVENTION

The invention relates to a computing device, a computing method, a configuring method, and a computer readable medium

### BACKGROUND OF THE INVENTION

As more and more of the value of computer systems resides in the code, there is an increasing desire to protect the assets represented by the code. For example, one approach taken to protect software is to use so-called white box cryptography. In white-box cryptography a secret key is used to encrypt or decrypt data in such a manner that it is hard to recover the secret key stored in the software. An example of a white-box implementation of a block cipher is for example given in WO2017063986 (included herein by reference). For example, operations on data may be represented by parametrized functions which are then encoded. Since the functions are encoded it is hard to tell what the functions represent, and in particular what part of the key they may use. The parametrized functions that are employed include for example: table look-up operations, matrix multiplication and polynomial evaluations. These functions are typically computed over some finite group or field, e.g., the finite group with 256 elements, or the integers mod 256, and the like. By stringing such functions together even complicated functions such as block ciphers can be implemented. A classic example of a table based white-box implementation is given in the paper "White-Box Cryptography and an AES Implementation", by S. Chow, et al. (included herein by reference).

Nevertheless, even an application protected by white-box technology conventionally comprises computer code and data. By copying the code and data from the intended computer system to an unauthorized computer system, it may be possible to execute the application on a new system, even if it may be too hard to reverse engineer the software. Copying an application may also be used in itself to attack the software. A known attack includes copying the software application to a virtual environment and then reverse engineering and/or cryptanalyzing the software application in isolation, e.g., to extract embedded secret data. This known attack is based upon the fact that the software is independent of the hardware.

United States Patent US 9 460 281 discloses a known method to protect a so-called non-native application by splitting the non-native application into a non-native application stub and native code functions. During execution, the non-native application stub calls, via a trusted module application program interface, one or more native code functions, which are executed in a trusted software module.

Although the method of US 9 460 281 offers an increased level of security, it requires the software to trust the hardware, and vice versa. In particular, the manufacturer of the trusted environment may not trust an app not to execute illegal software, e.g., malicious code. Conventionally this worry is addressed by auditing code before it is granted access to protected functionality

In other words, a trust relationship is required between the hardware and the software. However, such a trust relationship is not always possible or desirable. This creates a dilemma, there are many developers who would like to be able to bind their software to particular platforms. For example, there are many untrusted app developers who want to bind their apps to the hardware platform. Such binding would make it hard to pirate the software and run it on an unauthorized platform. On the other hand, there is a need from the provider of security services to be careful and only provide access to the secure functions for trusted or audited developers. The known method fails to provide a solution to this problem.

### SUMMARY OF THE INVENTION

An electronic computing device for protected data processing is provided. The computing device comprises
- a private key store arranged for storing a private key of the computing device,
- a configuration data interface arranged to receive encrypted configuration data, said encrypted configuration data being encrypted with a public key corresponding to the private key of the computing device, said public and private key forming an asymmetric key-pair,
- an operand data interface arranged to receive input operand data,
- a configuration store for storing the configuration data,
- an output data interface arranged to communicate the result of a transformation,
- a processor circuit configured to
   - decrypt the encrypted configuration data with the private key stored in the private key store and store the configuration data in the configuration store,
   - apply a transformation to the operand data to obtain the result of the transformation, the transformation being determined by the configuration data.

The computing device allows for the execution of software that is bound to this particular computing device. Consider software that comprises one or more of the transformations which are implemented through transformations configured with encrypted configuration data. Such software would not work correctly on a different computing device, even if the different computing device were of the same design. The different computing device has a different private key in its private key store. Accordingly, the decryption of configuration data will proceed incorrectly and the transformation will not be correct.

From the hardware point of view less trust is required. A malicious program is restricted in what it can do, as it can only provide configuration data, and not arbitrary code. Thus, malicious programs are restricted through what is possible with the configuration data. For example, the configuration data may only allow transformations that only depend on the configuration data and the operand data, and are thus shielded from the memory of the computing device, in particular from the memory used by other applications running in the same hardware.

For example, in an embodiment the computing device comprises a processor circuit arranged to execute processor circuit instructions, that decrypt the encrypted configuration data with the private key stored in the private key store and store the configuration data in the configuration store, and apply a transformation to the operand data to obtain the result of the transformation, the transformation being determined by the configuration data. That processor circuit, whether implemented as a hardware processor circuit or as a virtual processor circuit, may have elevated rights, so that software running on that processor circuit potentially could execute highly malicious code. Malicious code may include, e.g., unauthorized reading or writing of data belonging to different applications, unauthorized communications, and the like. However, an application that can only interact with that processor circuit through configuration data and operand data may be restricted to having operations performed on the operand data, e.g., as determined by the configuration data. In fact, once the operation is configured, its outcome may be fully determined by the operand data. Accordingly, even though the processor circuit could, in principle, perform malicious actions, an application is restricted from triggering those malicious actions because of the specific interface with which the application communicates with the processor circuit.

Interestingly, less trust is needed between the hardware of the computing device and software that is bound to it as well. Binding software to the computing device only requires access to the configuration data, not to other parts of the software.

A further aspect of the invention is a system for configuring a particular computing device for protected data processing. Further aspects of the invention are a corresponding computing method and a method for configuring.

The computing device is an electronic device, in particular it may be a mobile electronic device, a mobile phone, a set-top box, a smart-card, a computer, etc. The system for configuring may be implemented in a configuring device. The configuring device may be a computer, a server, etc. The method for protected computing described herein may be applied in a wide range of practical applications. Such practical applications include: cryptography, digital rights management, financial applications, copy protection, white-box cryptography, etc.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code stored on a computer readable medium for performing a method according to the invention when said program product is executed on a computer.

In a preferred embodiment, the computer program comprises computer program code adapted to perform all the steps of a method according to the invention when the computer program is run on a computer. Preferably, the computer program is embodied on a computer readable medium.

Another aspect of the invention provides a method of making the computer program available for downloading. This aspect is used when the computer program is uploaded into, e.g., Apple's App Store, Google's Play Store, or Microsoft's Windows Store, and when the computer program is available for downloading from such a store.

### BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the Figures, elements which correspond to elements already described may have the same reference numerals. In the drawings,
Fig. 1 schematically shows an example of an embodiment of a computing device,
Fig. 2 schematically shows an example of an embodiment of a computing device,
Fig. 3 schematically shows an example of an embodiment of system for binding software to a computing device,
Fig. 4 schematically shows an example of an embodiment of a first code, Fig. 5 schematically shows an example of an embodiment of a computing method,
Fig. 6 schematically shows an example of an embodiment of a method for configuring a particular computing device for protected data,
Fig. 7a schematically shows a computer readable medium having a writable part comprising a computer program according to an embodiment,
Fig. 7b schematically shows a representation of a processor system according to an embodiment.

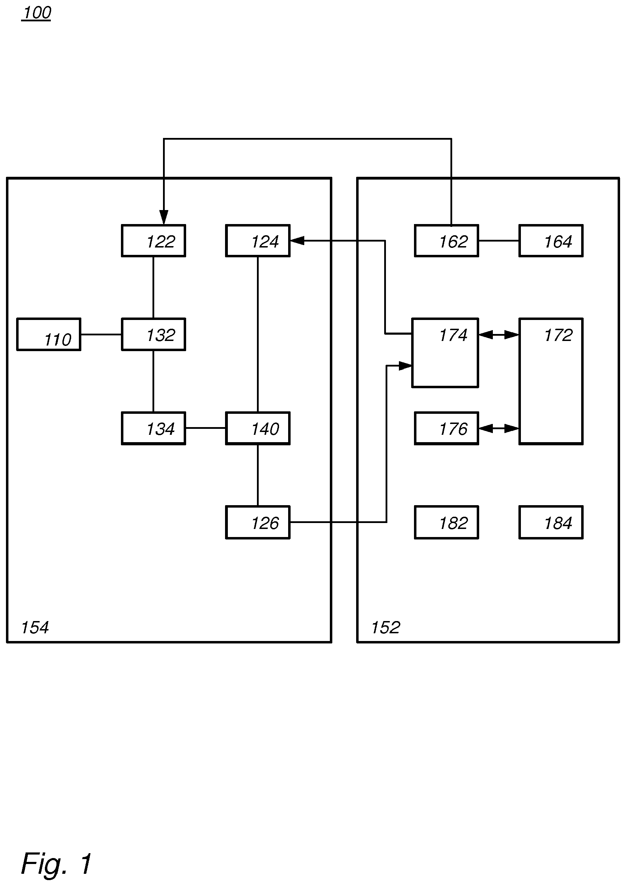

### List of Reference Numerals in figures 1-3:

- 100, 200: a computing device
- 110: a private key store
- 122: a configuration data interface
- 124: operand data interface
- 126: an output data interface
- 132: a decryption unit
- 134: a configuration store
- 140: a transformation unit
- 152: a first computation part
- 154: a second computation part
- 162: a configuration unit
- 164: an encrypted configuration store
- 172: a data store
- 174: a bounded computation unit
- 176: an unbounded computation unit
- 182: a display output interface
- 184: an audio output interface
- 210: a first computing part
- 212: a first memory
- 214: a first processing unit
- 220: a second computing part
- 222: a second memory
- 224: a second processing unit
- 230: a data interface
- 300: a system for configuring a particular computing device
- 312: a code interface
- 314: an output interface
- 320: a second code unit
- 332: a configuration data store
- 334: an encryption unit
- 340: a public key database
- 350: a computing device

### DETAILED DESCRIPTION OF THE EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

Further, the invention is not limited to the embodiments, and the invention lies in each and every novel feature or combination of features described herein or recited in mutually different dependent claims.

Fig. 1 schematically shows an example of an embodiment of a computing device 100. Computing device 100 is configured for protected data processing. At least part of the software that runs on device 100 is bound to its hardware. When it is tried to run software that is bound to a particular device on a different device, then it will not run, or at least will not run in the same manner, e.g., with execution problems or failures. In particular, running the protected software on hardware to which it is not bound may result in wrong computed results. For example, in case the protected software comprises a decryption operation implemented with bounded software, then the decryption operation may fail to decrypt or will decrypt to the wrong values.

For example, in case the protected software comprises an access mechanism to content, e.g., a digital rights mechanism, the bounding may result that the DRM software is not correctly executed and thus that an otherwise valid right is not granted. The bounding may also result in that the decryption of protected content does not proceed as it normally would.

For example, in case the protected software comprises a financial application, the bounding may result in that transactions cannot be validly signed and thus no unauthorized transactions can take place. Interestingly, the same software can be bound to many different devices of the same type as device 100. The bounding mechanism scales well to many devices.

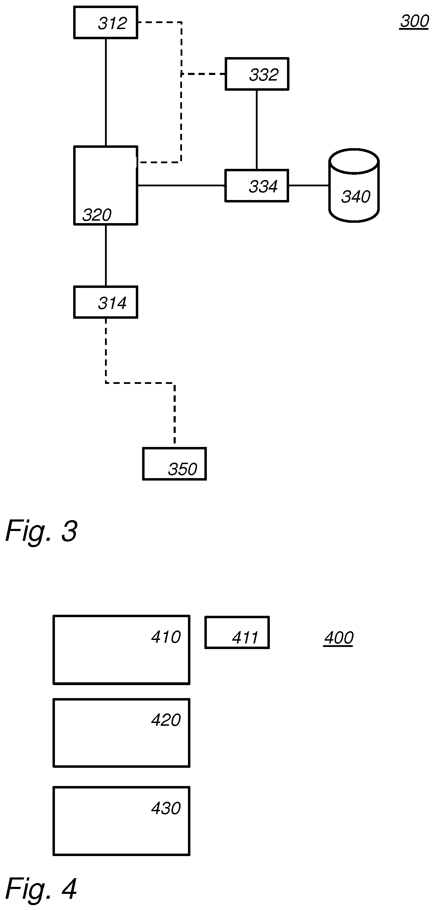

The functionality of the computing devices shown herein depend at least in part on one or more processor circuits, examples of which are shown herein. Figs. 1 and 3 show functional units that may be functional units of the processor circuit. For example, the figures may be used as a blueprint of a possible functional organization of the processor circuit. The processor circuit is not shown separate from the units in Figs. 1 and 3. For example, the functional units shown in the figures may be wholly or partially implemented in computer instructions that are stored at device 100, e.g., in an electronic memory of device 100, and are executable by a microprocessor of device 100. In hybrid embodiments, functional units are implemented partially in hardware, e.g., as coprocessors, e.g., vector units, e.g., matrix multipliers, polynomial evaluators, etc., and partially in software stored and executed on device 100.

Computing device 100 comprises a first computation part 152 and a second computation part 154. First computation part 152 is an untrusted environment, whereas second computation part 154 is a trusted environment. In particular, software running on first computation part 152 does not have access to the internal data of second computation part 154. For example, access of first part 152 to second part 154 may be restricted to defined interfaces. For example, first part 152 can only provide data to second part 154 through defined input interfaces (of which two are shown in Fig. 1: a configuration data interface 122 and operand data interface 124) and only receive data from second part 154 through defined output interfaces (of which one is shown in Fig. 1: output data interface 126).

There are many ways in which two such separate computation parts can be implemented.

For example, second part 154 may be part of an operating system of device 100. For example, the interface to and from second part 154 may be regular interfaces of the operating system. For example, the operating system may be Android or Linux, etc. In this case the first part 152 may be software that runs on the device with some permissions and/or security level, etc., as is customary. In this case, user-level software such as first part 152 does not have direct access to the internals of second part 154.

Another way to implement the first and second part is to use some hardware supported software separation. For example, one may provide two virtual processors, e.g., backed by hardware based access control. This lets the computing device switch between two states, sometimes referred to as worlds. This prevents information from leaking from the more trusted world to the less trusted world. This world switch may be orthogonal to all other capabilities of the processor, so that each world can operate independently of the other while using the same core. For example, memory and peripherals may be aware of the operating world of the core and may use this to provide access control to secrets and code on the device. In this example, first part 152 and second part 154 operate in different worlds. A well-known example of using virtual processors is TrustZone for Arm processors, e.g., in ARMv6KZ.

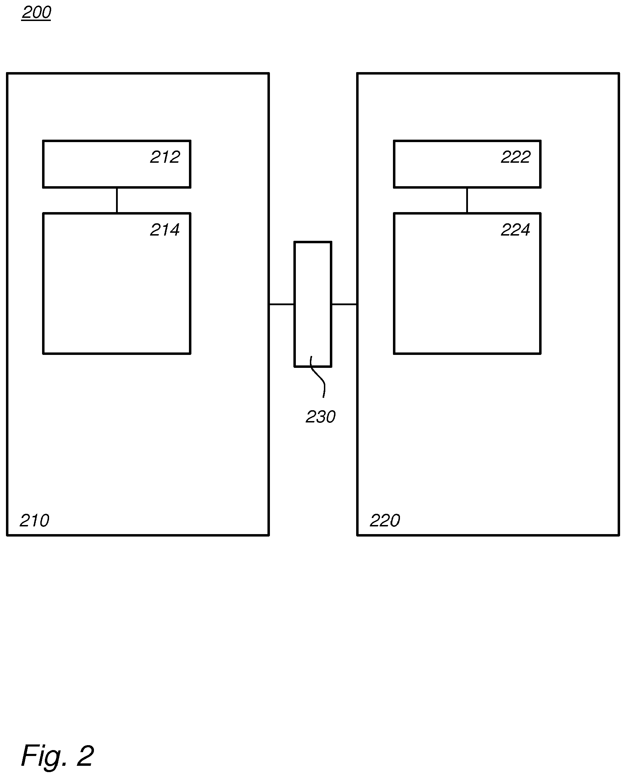

A further example, of a first and second part is illustrated in Fig. 2. Fig. 2 schematically shows an example of an embodiment of a computing device 200. Computing device 200 comprises a first computing part 210 and a second computing part 220. For example, the first computing part 210 may implement the functionality of first part 152 and the second computing part 220 may implement the functionality of second part 154. First part 210 comprises a first processing unit 214 and a first memory 212. Second part 220 comprises a second memory 222 and second processing unit 224. The processing units are connected to their respective memories and execute computer processing instructions stored thereon. The memories may also store data for the instructions. First part 210 and second part 220 can communicate with each other through a data interface 230. For example, data interface 230 may implement interfaces 122, 124 and 126.

Instead of having multiple physically different processing units, e.g., different cores, e.g., different cores on a SoC (system on chip), one may also use virtual processing units. In such an embodiment, there may be a switching interface to switch execution between the first and second virtual processor.

Returning to Fig. 1. First part 152 is configured to run a computer program. For example, first part 152 may be configured to run a cryptographic operation, such as a block cipher or a hash function, etc. The computer program running on first part 152 may also implement other functionality that is to be protected, e.g., proprietary algorithms, e.g., image processing software, e.g., speech recognition or text to speech software, and the like. All of these functions may be implemented using parametrized functions.

For example, first part 152 may comprise a data store 172. Data store 172 may comprise data on which the programming of first part 152 acts. For example, data store 172 may be a memory. The same memory may also comprise computer instructions making up the computer program. First part 152 comprises a bounded computation unit 174 and an unbounded computation unit 176. The bounded and the unbounded computation unit are functional units that may be implemented in computer instructions stored in a memory of device 100, e.g., of part 152, e.g., in store 172. Both the bounded and the unbounded computation units operate on data stored in data store 172. For example, they may retrieve some data from the store, apply some operation on the data, and write some new data back to the store 172. The difference is that unbounded computation unit 176 performs these operations locally in first part 152. For example, they are executed on the first processor circuit 210, or they are executed in a first world, or on a first virtual processor, or in a user-level software code, etc. The bounded computation unit 174 on the other hand uses second part 154 to perform operations. For example, bounded computation unit 174 may also retrieve data from store 172 but uses the interfaces of second part 154 to have the computation performed there. For example, they are executed on the second processor circuit 220, or they are executed in a second world, or on a second virtual processor, or in a root-level or operating system level software code.

Second part 154 comprises a private key store 110, a configuration data interface 122, a decryption unit 132 and a configuration store 134. Private key store 110 may be arranged for storing a private key of the computing device. For example, in an embodiment during an enrollment phase, e.g., during manufacture, an asymmetric key pair for encryption and decryption is generated. For example, the asymmetric key pair may be an RSA key pair. Other asymmetric encryption/decryption schemes are also applicable. The key pair comprises a public key for encryption and a corresponding private key for decryption. Note that access to the public key allows encryption but not decryption. The adjectives public and private indicate the different security levels. For example, in some embodiments the public keys may be published so that anyone can encrypt. This does not mean that public keys are necessarily published. For example, in an embodiment access to the public key may also be restricted, e.g., on a need to know basis. Private key store 110 is not accessible from first part 152. Separation of the data of the first and second part may be enforced using software separation techniques as described herein, or as known in the art. Private key store 110 may also comprise secure memory. For example, memory protected by fuses, PUFs, etc.

Configuration data interface 122 is arranged to receive encrypted configuration data. The configuration data defines the transformation that is later performed by first part 154. The encrypted configuration data is encrypted with the public key that corresponds to the private key of the computing device, that is the private key stored in private key store 110. For example, use of the configuration data interface 122 may be during a use phase. The use phase is after the enrollment phase. Typically, there is a single enrollment phase in which a single private key is stored in private key store 110, yet the configuration interface 122 may be used many times during the use phase.

The decryption unit 132 is configured to decrypt the configuration data received at configuration data interface 122. Decryption unit 132 uses the private key in private key store 110 to do this. For example, decryption unit 132 may apply the RSA decryption algorithm. The decrypted configuration data is stored in configuration store 134. Configuration store 134 may be volatile or non-volatile memory. Configuration store 134 is not accessible from first part 152. In an embodiment, configuration store 134 may be arranged to store multiple configuration data. For example, configuration data interface 122 may be arranged to receive an index in conjunction with the encrypted configuration data. Configuration store 134 may comprise multiple slots, the index indicating in which slot the decrypted configuration data is to be stored.

Second part 154 comprises an operand data interface 124 arranged to receive input operand data, a transformation unit 140 and an output data interface 126. The operand data is the data on which the transformation is to act. In case of multiple configuration data, the operand data interface 124 also be arranged for an index, indicating a slot of configuration data which is to be used.

Transformation unit 140 is arranged to apply a transformation to the operand data to obtain the result of the transformation, the transformation being determined by the configuration data. In an embodiment, the transformation is not a procedural computation language. For example, the configuration data does not allow representation of loops or conditional jumps. In an embodiment, execution of a transformation does not require conditional jumps wherein the conditional jump depends on the operand data. Such highly restricted transformations do not allow most types of malicious code, and thus do not need extensive vetting, even if they run in a trusted world. For example, the transformation may comprise a fixed sequence of arithmetical operations. The sequence is determined before the configuration data is received. Each arithmetical operation in the sequence operates on operand data received on operand data interface 124, configuration data stored in configuration store 134 or the results of previous arithmetical operations in the same sequence. For example, the fixed sequence could be implemented in a so-called 'basic block', e.g., a straight-line code sequence with no branches in except to the entry and no branches out except at the exit. The result of the transformation is sent back to first part 152 through the output data interface 126.

Below three examples of suitable transformation are given.

A first example of a suitable transformation is matrix multiplication. For example, the configuration data may comprise at least part of the matrix elements. For example, configuration data may only comprise the non-zero elements. The configuration data may comprise all the matrix elements. The operand data indicates an input vector of the matrix. The result of the transformation is obtained by matrix multiplying the matrix and the vector. One of the dimensions of the matrix could be one, but in an embodiment both the row and column dimension are at least two. In an example, one or both the dimensions of the matrix are much larger, e.g., at least 10, at least 100, etc. For example, the matrix may be a square matrix. In an embodiment, the parametrizable transformation is an affine transformation, comprising the matrix multiplication. In an embodiment of a block cipher, the matrix may be used to implement the linear part of a block cipher. For example, in case of the AES block cipher (See Fips 197, included herein by reference), an affine transformation may be used to implement all of the affine parts, e.g., the ShiftRows, MixColumns, AddRoundKey steps and the affine part of the SubBytes step. Note that all of these could be expressed as table or polynomial operations as well.

A second example of a suitable transformation is polynomial evaluations. In this case, the configuration data comprises at least part of the polynomial coefficients, or even all of the polynomial coefficients. For example, the configuration data may comprise only the non-zero polynomial coefficients. The polynomial and affine operation may be over a finite field, e.g., over the finite field with 2 or with 256 elements. Any operation on bytes may be expressed as a polynomial over the finite field with 256 elements. Accordingly, polynomials can be used to express the SubBytes operation, in particular the non-linear part thereof. The result of the transformation is obtained by evaluating the polynomial for the operand data. The polynomial can be univariate, bivariate or multivariate.

A third example of a suitable transformation is table-look up. In this case, the configuration data comprises at least part (or even all) of the table content. The operand data indicates an index in the table. The result of the transformation is obtained by looking-up the index in the table. Like polynomials, table look up is a very versatile operation. Any operation can be expressed as a table look-up or as a network of table look-up operations, e.g., as is conventional in white-box implementations.

A device 100 may support one or more or all of these operations, e.g., through the use of a selector supplied with the configuration data. The above examples are particularly advantageous as they allow a great range of transformation, without giving full computational power. Moreover, any of these operations can operate on encoded data as is conventional in white-box cryptography. In an embodiment, the configuration data comprises at least half of the parameters needed to define the transformation.

For example, a white-box implementation of a cryptographic operation, e.g., a block cipher, e.g., AES or DES etc., can be performed by executing multiple transformations of the type given above, usually operating on encoded data. For example, only table look-up or only polynomials may be used. Or one of table look-up and only polynomials may be combined, e.g., alternated, with affine operations.

First part 152 comprises an encrypted configuration store 164 and a configuration unit 162. For example, encrypted configuration store 164 comprises configuration data encrypted with the public key of second part 154. For example, encrypted configuration store 164 may be supplied with the configuration data as part of being supplied with an application program. The application program is bound to device 100 by virtue of the fact that the encrypted configuration store 164 contains configuration data encrypted with the public key of device 100. Only device 100 contains the corresponding private key, and is thus the only device that is capable of decrypting the configuration data, and using the configuration data. For example, configuration unit 162 may be configured to send encrypted configuration data over configuration data interface 122. As a result, decrypted configuration data will appear in configuration store 134, which in turn allows the transformation implemented by transformation unit 140 to be used.

After the configuration, bounded computation unit can use transformation unit 140 by sending operand data over operand data interface 124, and receiving the result of the transformation over output data interface 126. For example, the program executed by first part 152 may comprise multiple sequences such as
- Configuring with first encrypted configuration data
- Applying a first bounded transformation on one or more operand data
- Performing one or more non-bounded operations
- Configuring with second encrypted configuration data
- Applying a second bounded transformation on one or more operand data
- Performing one or more non-bounded operations
- etc.

First part 152 may further comprise a display output interface 182 and an audio output interface 184. For example, first part 152 may implement a decryption routine to decrypt audio and/or video data received at device 100 over a communication link, e.g., over a wireless connection. The audio and/or video data may be rendered by first part 152. For example, the decrypted and rendered video data may be displayed through display output interface 182 and/or audio output interface 184. For example, these interfaces may connect to a display and/or speaker respectively.

Fig. 3 schematically shows an example of an embodiment of system 300 for binding software to a computing device. Fig. 3 also shows a computing device 350 that is being configured by the system. System 300 may be implemented in a single device, but may also be implemented distributed over multiple devices. Together, the system for configuring a particular computing device 300 and computing device 350 form a system for binding software to a computing device. Typically, the system for configuring will comprise multiple computing devices.

System 300 comprises a code interface 312. Code interface 312 is arranged for receiving first computer code, said first computer code comprising a transformation on operand data. First computer code may be a high-level language, in this case system 300 comprises a compiler for further compiling the first computer code. First computer code may comprise low-level computer instructions. In this case, the computer code may be linked to encrypted configuration data. For example, in both cases the transformation and operand data may be indicated in the first computer code with corresponding indicators. For example, the indicators may be special computer code language constructs, e.g., flags, or they may be pointers, pointing to points in the code where a transformation is used, etc.

System 300 comprises a configuration data store 332. Configuration data store temporarily stores the configuration data used in the first transformation. For example, in an embodiment, the configuration data may be directly received at the code input 312. The configuration may also be obtained by a suitable compiler. Both options are indicated in Fig. 3 with dashed lines towards configuration data store 332. For example, in white-box cryptography the code is often not written directly but generated by a code generator. The code generator is programmed to generate the appropriate white-box code. The code generator could instead of directly embedding tables, matrices or polynomials also generate the corresponding configuration code, e.g., in a separate computer file. The configuration code could be provided on interface 312, which in turn forwards it to store 332.

System 300 comprises an encryption unit 334 and a public key database 340. Public key database 340 could be provided as a connection to a database, e.g., a database in the cloud. Public key database 340 comprises multiple public keys corresponding to multiple computing devices, such as devices 100, 200, etc. In particular, public key database 340 comprises the particular public key of the particular computing device 350 that is currently being configured. For example, system 300 may receive an identifier of device 350, e.g., together with the first code over first code interface 312. Encryption unit 334 is configured to obtain the particular public key of the particular computing device, e.g., to obtain the particular public key of device 350 from database 340, e.g., by querying the database for device 350's identifier. The identifier may be a random number, a bit string, a hash of the public key, etc.

Encryption unit 334 is configured to encrypt the configuration data in configuration data store 332 with the particular public key for device 350 that was obtained from database 340, thus obtaining encrypted configuration data.

System 300 comprises a second code unit 320. Second code unit 320 may comprise a linker, e.g., to combine the first code with the encrypted configuration data from encryption unit 334. Second code unit t 320 may comprise a compiler, e.g., to convert the first code to executable instructions. Second code unit 320 may even comprise a code generator to generate code. For example, the code generator may simply receive a high-level description of a block cipher: e.g., so many rounds, these types of diffusion operators, these types of confusion operators, etc. In response, the code generator may generate a corresponding block cipher, e.g., containing operators according to white-box technology, e.g., using matrices, tables or polynomials.

In any case, second code unit 320 arranges second computer code from the first computer code. The second computer code is suitable for execution on device 350. In particular the second computer code comprises instructions to send the encrypted configuration data over the configuration data interface, send the operand data over the operand data interface, and to receive the result of the transformation over the output data interface of the particular device.

System 300 comprises an output interface 314 arranged to program device 350 with the second code. For example, the output interface may be a wired connection arranged to transfer the second code from system 300 to device 350. For example, the output interface may be a wireless interface, e.g., to download the second code from an online provider.

In an embodiment, the first code only comprises configuration data and an identifier of the computing device. In this case, the second code may only comprise the encrypted configuration data. In this embodiment, interface 314 is arranged to send the second code. Linking of the encrypted configuration data and programming the computing device is left to a further device downstream.

In an embodiment, system 300 is part of a DRM system. DRM software is bound to a particular device before it is allowed to be downloaded. After downloading, a user can receive digital rights, e.g., comprising content keys, and encrypted content. The second code applies the rights and/or decrypts the content using the bound transformation.

System 300 may be provided as a service, e.g., over a computer network, e.g., over the internet. For example, a user orders software with a software provider. Together with the order, the user also provides an identifier of his computing device, say a mobile phone, a computer, or the like. The software provider then provides the first code with the identifier to interface 312 over the computer network, and receives in return the second code bound to the user's computing device. The software provider then provides the second code to the user. System 300 could also be incorporated in online software repositories, e.g., of the type such a Google PlayStore, etc.

Fig. 4 schematically shows an example of an embodiment of a first code 400. First code 400 may be received on interface 312. First code 400 may comprise an identifier 411 identifying a computing device, e.g., computing device 350. First code 400 comprises computer instructions 410, e.g., machine language instructions. First code 400 comprises code to call second 154 through the configuration and operand interface. Computer instructions 410 contains dummy data for the configuration data, e.g., a null pointer. First code 400 comprises a table 420 giving the locations of the dummy code in instructions 410. For example, table 420 may comprise multiple pointers. First code 400 comprises plain (not-encrypted) configuration data 430. The configuration data is to be encrypted and the dummy data in instructions 410 may be modified to refer to the encrypted configuration data, e.g., by substituting the configuration data, or by including a pointer.

The configuration data interface, operand data interface and output data interface in the various embodiments of the computing device may be implemented in various ways. For example, the interfaces may be implemented as memory to which both parts 152 and 154 have access. For example, they may be implemented as operating system calls. For example, they may be implemented as APIs. For example, the communication between the first and second part may be implemented by signals or pipes. The interfaces may be implemented by a hardware signaling system, e.g., interrupt based. The code interface and output interface may be computer network interfaces, e.g., wired or wireless interface. For example, they may be a network interface to a local or wide area network, e.g., the Internet, a storage interface to an internal or external data storage, an application interface (API), etc.

The computing device and the configuring system may have a user interface, which may include well-known elements such as one or more buttons, a keyboard, display, touch screen, etc. The user interface may be arranged for accommodating user interaction for performing, e.g., a configuration action, e.g., a transformation action, e.g., a decryption operation comprising multiple transformations, etc.

The storage needed in the computing device and the configuring system may be implemented as an electronic memory, say a flash memory, or magnetic memory, say hard disk or the like. The storage may comprise multiple discrete memories together making up the storage. The storage may also be a temporary memory, say a RAM.

For example, in an embodiment stores 110 and 64 are implemented as non-volatile memory, whereas stores 134 and 172 are implemented as volatile memory.

Typically, the devices 100, 200, 300, comprise a microprocessor (not separately shown in Figs. 1 and 3) which executes appropriate software stored at the devices; for example, that software may have been downloaded and/or stored in a corresponding memory, e.g., a volatile memory such as RAM or a non-volatile memory such as Flash (not separately shown). The devices may in part be implemented in programmable logic, e.g., as field-programmable gate array (FPGA), or application-specific integrated circuit (ASIC), i.e., an integrated circuit (IC) customized for their particular use. For example, the circuits may be implemented in CMOS, e.g., using a hardware description language such as Verilog, VHDL etc.

In an embodiment, the devices comprise circuits corresponding to the functional units described herein. The circuits may be a processor circuit and storage circuit, the processor circuit executing instructions represented electronically in the storage circuits.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

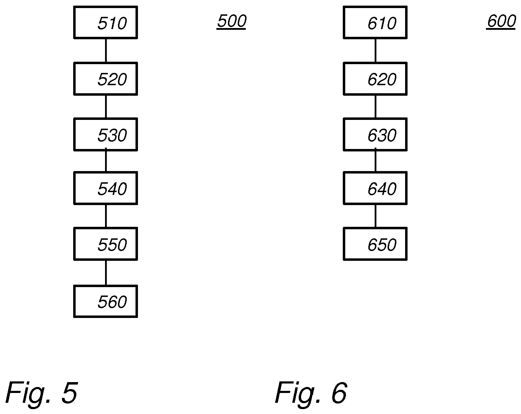

Fig. 5 schematically shows an example of an embodiment of a computing method 500. Computing method is an electronic method for protected data processing. Computing method 500 comprises
- storing 510 a private key of the computing device,
- receiving 520 encrypted configuration data, said encrypted configuration data being encrypted with a public key corresponding to the private key of the computing device, said public and private key forming an asymmetric key-pair,
- receiving 530 input operand data,
- decrypting 540 the encrypted configuration data with the private key stored in the private key store and storing the configuration data in the configuration store,
- applying 550 a transformation to the operand data to obtain the result of the transformation, the transformation being determined by the configuration data.
- communicate 560 the result of the transformation.

Fig. 6 schematically shows an example of an embodiment of a method 600 for configuring a particular computing device for protected data. Method 600 comprises
- receiving 610 first computer code, said first computer code comprising a transformation on operand data,
- obtaining 620 configuration data corresponding to the transformation
- obtaining 630 the particular public key of the particular computing device,
- encrypting 640 the configuration data with the particular public key obtaining encrypted configuration data,
- arranging 650 second computer code from the first computer code, the second computer code including instructions to send the encrypted configuration data over the configuration data interface, send the operand data over the operand data interface, and to receive the result of the transformation over the output data interface of the particular device.

Many different ways of executing the methods are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. Moreover, a given step may not have finished completely before a next step is started.

A method according to the invention may be executed using software, which comprises instructions for causing a processor system to perform method 500 or 600. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. A method according to the invention may be executed using a bitstream arranged to configure programmable logic, e.g., a field-programmable gate array (FPGA), to perform the method.

It will be appreciated that the invention also extends to computer programs, particularly computer programs on or in a carrier, adapted for putting the invention into practice. The program may be in the form of source code, object code, a code intermediate source, and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

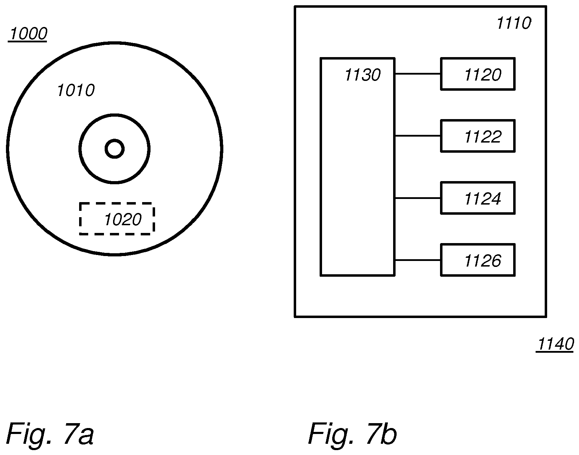

Fig. 7a shows a computer readable medium 1000 having a writable part 1010 comprising a computer program 1020, the computer program 1020 comprising instructions for causing a processor system to perform a computing method or a method for configuring, according to an embodiment. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method of computing method or the method for configuring.

Fig. 7b shows in a schematic representation of a processor system 1140 according to an embodiment. The processor system comprises one or more integrated circuits 1110. The architecture of the one or more integrated circuits 1110 is schematically shown in Fig. 7b. Circuit 1110 comprises a processing unit 1120, e.g., a CPU, for running computer program components to execute a method according to an embodiment and/or implement its modules or units, e.g., a method of computing method or a method for configuring. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, the computing device or configuring system may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. An electronic computing device (100) for protected data processing, the computing device comprising
- a private key store (110) arranged for storing a private key of the computing device,
- a configuration data interface (122) arranged to receive encrypted configuration data, said encrypted configuration data being encrypted with a public key corresponding to the private key of the computing device, said public and private key forming an asymmetric key-pair,
- an operand data interface (124) arranged to receive input operand data,
- a configuration store (134) for storing the configuration data,
- an output data interface (126) arranged to communicate the result of a transformation,
- a processor circuit configured to
- decrypt the encrypted configuration data with the private key stored in the private key store and store the configuration data in the configuration store,
- apply a transformation to the operand data to obtain the result of the transformation, the transformation being determined by the configuration data.

2. A computing device as in Claim 1, wherein the transformation is one of the following:
- a matrix multiplication, the configuration data comprising at least part of the matrix elements, the operand data indicating an input vector of the matrix, the result of the transformation being obtained by matrix multiplying the matrix and the vector,
- a polynomial evaluation, the configuration data comprising at least part of the polynomial coefficients, the result of the transformation being obtained by evaluating the polynomial for the operand data
- a table-look up operation, the configuration data comprising at least part of the table content, the operand data indicating an index in the table, the result of the transformation being obtained by looking-up the index in the table.

3. A computing device (200) as in Claim 1, wherein the processor circuit comprises a first processor circuit (214) and a second processor circuit (224),
- the first processor circuit being arranged to execute first processor circuit instructions, said first processor circuit instructions including instruction arranged to
- send encrypted configuration data over the configuration data interface
- send operand data over the operand data interface,
- receive the result of the transformation over the output data interface
- the second processor circuit being arranged to execute second processor circuit instructions, said second processor circuit instructions including instructions arranged to
- decrypt the encrypted configuration data with the private key stored in the private key store and store the configuration data in the configuration store,
- apply a transformation to the operand data to obtain the result of the transformation, the transformation being determined by the configuration data.

4. A computing device as in Claim 3, wherein the first processor circuit and the second processor circuit are two virtual processors, the computing device comprising a switching interface to switch execution between the first and second virtual processor.

5. A computing device as in any one of the preceding claims, wherein the processor circuit is configured to execute a cryptographic operation by executing multiple transformations using encrypted configuration data.

6. A computing device as in any one of the preceding claims, wherein the processor circuit is arranged to apply the transformation by executing a fixed sequence of arithmetical operations, said arithmetical operations operating on the operand data, the configuration data, and/or results of previous arithmetical operations in the fixed sequence.

7. A system (300) for configuring a particular computing device as in claim 1 for protected data processing, the system comprising
- a code interface (312) for receiving first computer code, said first computer code comprising a transformation on operand data,
- a processor circuit configured to
- obtain configuration data corresponding to the transformation
- obtain the particular public key of the particular computing device,
- encrypt the configuration data with the particular public key obtaining encrypted configuration data,
- arranging second computer code from the first computer code, the second computer code including instructions to send the encrypted configuration data over the configuration data interface, send the operand data over the operand data interface, and to receive the result of the transformation over the output data interface of the particular device.

8. A system for binding software to a computing device, the system comprising a system for configuring a particular computing device as in Claim 7, and a computing device as in Claim 1.

9. An electronic computing method (500) for protected data processing, the computing method comprising
- storing (510) a private key of the computing device,
- receiving (520) encrypted configuration data, said encrypted configuration data being encrypted with a public key corresponding to the private key of the computing device, said public and private key forming an asymmetric key-pair,
- receiving (530) input operand data,
- decrypting (540) the encrypted configuration data with the private key stored in the private key store and storing the configuration data in the configuration store,
- applying (550) a transformation to the operand data to obtain the result of the transformation, the transformation being determined by the configuration data.
- communicate (560) the result of the transformation.

10. A method (600) for configuring a particular computing device as in claim 1 for protected data processing, the method comprising
- receiving (610) first computer code, said first computer code comprising a transformation on operand data,
- obtaining (620) configuration data corresponding to the transformation
- obtaining (630) the particular public key of the particular computing device,
- encrypting (640) the configuration data with the particular public key obtaining encrypted configuration data,
- arranging (650) second computer code from the first computer code, the second computer code including instructions to send the encrypted configuration data over the configuration data interface, send the operand data over the operand data interface, and to receive the result of the transformation over the output data interface of the particular device.

11. A computer readable medium (1000) comprising transitory or non-transitory data (1020) representing instructions to cause a processor system to perform the method according to claim 9 or 10.
